# EUROPÄISCHE PATENTSCHRIFT

(11) **EP 1 466 084 B1**
(45) Veröffentlichungstag und Bekanntmachung des Hinweises auf die Patenterteilung: **02.05.2007**
(21) Anmeldenummer: 02777707.7
(22) Anmeldetag: 30.10.2002
(51) Int. Cl.: F02C 7/18, F01K 23/10

(54) **GASTURBOGRUPPE**
GAS TURBINE GROUP
GROUPE A TURBINE A GAZ

(30) Priorität: 02.11.2001 CH 201601
(43) Veröffentlichungstag der Anmeldung: 13.10.2004
(73) Patentinhaber: Alstom Technology Ltd, 5400 Baden (CH)
(72) Erfinder: DITTMANN, Rolf, Dr., CH-5415 Nussbaumen (CH); HOFFMANN, Jürgen, Dr., CH-5417 Untersiggenthal (CH); ROFKA, Stefan, CH-5415 Nussbaumen (CH); WÄLCHLI, René, CH-5013 Niedergösgen (CH)
(86) Internationale Anmeldenummer: PCT/IB2002/004538
(87) Internationale Veröffentlichungsnummer: WO 2003/038256

(56) Entgegenhaltungen:
- EP-A- 0 440 164
- EP-A- 1 128 039
- PATENT ABSTRACTS OF JAPAN vol. 004, no. 164 (M-041), 14. November 1980 (1980-11-14) & JP 55 112826 A (HITACHI LTD), 1. September 1980 (1980-09-01)
- PATENT ABSTRACTS OF JAPAN vol. 017, no. 374 (M-1445), 14. Juli 1993 (1993-07-14) & JP 05 059965 A (MITSUBISHI HEAVY IND LTD), 9. März 1993 (1993-03-09)

## Beschreibung

Die Erfindung betrifft eine Gasturbogruppe gemäss dem Oberbegriff des Anspruchs 1.

### Stand der Technik

Parallel mit den Anforderungen an die Leistung und den Wirkungsgrad von Gasturbogruppen steigen die Anforderungen an die Kühlung der thermisch hochbelasteten Maschinenkomponenten einerseits und an die Auslegung des Kühlsystems andererseits. So muss eine ausreichende Kühlung im Interesse der Betriebssicherheit gewährleistet werden. Auf der anderen Seite ist der Kühlluftverbrauch soweit möglich einzuschränken. In der EP 62932 wurde vorgeschlagen, die Komponenten einer Gasturbine mit Dampf im geschlossenen Kreislauf zu kühlen. Dies erfordert eine vergleichsweise aufwändige Abdichtung der kühldampfführenden Komponenten. Gleichzeitig erfolgt eine rein konvektive Kühlung der Komponenten; auf die Wirkung eines Kühlfilms zur Verminderung des Wärmeeintrags wird hierbei verzichtet. In einer Anzahl weiterer Schriften, wie EP 684 369 oder der EP 995 891 und der dazu korrespondierenden US 6,161,385 wird vorgeschlagen, zur Kühlung von filmgekühlten Komponenten Dampf oder eine Dampf-Luft-Mischung zu verwenden. Solche Verfahren verbrauchen aber vergleichsweise grosse Dampfmengen, die hohe Anforderungen an die Reinheit und Überhitzung erfüllen müssen, damit es nicht zu einem Verstopfen der oft nur wenige Zehntel Millimeter grossen Filmkühlungsbohrungen kommt. Selbst wenn die erforderliche Dampfmenge und -qualität zur Verfügung steht, ist die Kühlung der Gasturbogruppe mit Dampf, anders als die mit Verdichter-Anzapfluft, nicht inhärent sicher.

In der Folge weist die Kühlung mit Verdichter-Anzapfluft nach wie vor eine Reihe handfester Vorteile auf, wobei die entnommene Kühlluftmenge im Interesse der Effizienz des Arbeitsprozesses minimiert werden soll. In der Folge werden Kühlluftsysteme immer mehr an der Grenze ausgelegt, um im - aus kühlungstechnischer Sicht - ungünstigsten Betriebspunkt noch eine ausreichende Kühlung sicherzustellen, aber nicht zuviel Kühlluft zu verbrauchen. Das bedeutet einerseits eine hohe Empfindlichkeit auf Abweichungen des Arbeitsprozesses vom Auslegungspunkt, wenn beispielsweise aufgrund von Verschiebungen der Druckverhältnisse in einer Maschine die Kühlluftmengen variieren. Andererseits resultiert in einer Reihe anderer Betriebspunkte eine Überkühlung der thermisch belasteten Komponenten, wodurch die Leistungs- und Wirkungsgradpotentiale unerschlossen bleiben.

Es wurde daher verschiedentlich, beispielsweise in der EP 1 028 230, vorgeschlagen, im Kühlluftpfad variable Drosselstellen anzuordnen. DE 199 07 907 schlägt vor, durch verstellbare Verdichterlaufreihen, welche unmittelbar benachbart zu einer Anzapfstelle für Kühlluft angeordnet sind, unmittelbar den Vordruck der Kühlluft zu justieren. Wiewohl die Implementation dieser Massnahmen erfolgversprechend ist, sind sie natürlich sehr aufwändig und für eine Nachrüstung bestehender Gasturbogruppen kaum geeignet. Daneben birgt der Einbau beweglicher Teile in das Kühlluftsystem, wie in EP 1 028 230 offenbart, die latente Gefahr einer Verstopfung der Kühlluftleitungen bei mechanischem Bauteilversagen.

JP-A-55-112826 schlägt vor, in einem Kühlluftsystem zwei parallele Leitungen anzuordnen, von denen eine eine feste und eine eine variable Drosselstelle aufweist. Gemäss dieser Druckschrift ist ein grosser Teil der Kühlluft über die variable Drosselstelle leitbar; dies macht auch die vorgeschlagenen Lösung anfällig auf allfälliges Versagen.

### Darstellung der Erfindung

Der vorliegenden Erfindung liegt die Aufgabe zugrunde, bei der Kühlung einer Gasturbogruppe der eingangs genannten Art die Nachteile des Standes der Technik zu vermeiden.

Erreicht wird dies durch die Gesamtheit der Merkmale des Anspruchs 1.

Kern der Erfindung ist also, eine in den Kühlluftkanälen angeordnete Drosselstelle, wie sie nach dem Stand der Technik zur definierten Einstellung des Kühlluftmassenstroms dem Fachmann geläufig ist, durch einen Bypass zu umgehen, und den Bypassmassenstrom durch geeignete Mittel variabel zu gestalten, indem beispielsweise in einem als Bypass wirkenden zweiten Strömungskanal ein Stellorgan angeordnet wird; alternativ zu einer variablen Drosselung des Bypasses können auch Mittel angeordnet werden, welche eine variable Antriebskraft auf den Bypassmassenstrom ausüben, wie beispielsweise Ejektoren. Diese Mittel sind so ausgeführt, dass sie externen Steuereingriffen zugänglich sind. Der zweite Strömungskanal ist kleiner dimensioniert als der Kühlluftkanal; insbesondere ist der zweite Strömungskanal so dimensioniert, dass der durchgesetzte Massenstrom maximal 80% des Massenstroms des Hauptkühlluftkanals beträgt. Als günstig erweisen sich Werte im Bereich von 20% bis 50%; wenn dies für den angestrebten Variationsbereich ausreicht, kann der Bypassmassenstrom auch auf Werte von 10% und weniger oder auch nur 5% des Hauptmassenstroms oder sogar darunter dimensioniert werden. Der Auslegungsmassenstrom im Bypass muss dabei mindestens der angestrebten Dynamik der Steuerung entsprechen. Insbesondere vorteilhaft ist bei der erfindungsgemässen Lösung, dass nicht der gesamte Kühltuftmassenstrom variabel zu gestalten ist, sondern nur ein Teilstrom durch geeignete Mittel variiert werden muss. Vorteilhaft ist dabei weiterhin, dass dieser Bypasskanal, insbesondere bei der Kühlung des Stators, an eine von aussen zugängliche Stelle der Gasturbogruppe geführt werden kann, während das Hauptkühlsystem kompakt an der Maschine geführt werden kann. Dies ist ein wesentlicher Vorteil in Bezug auf die Wartung und die Einstellbarkeit; zudem eignet sich eine solche Massnahme wesentlich besser zur Nachrüstung bestehender Anlagen als eine variable Drosselung des gesamten Haupt-Kühlluftmassenstroms.

Im Hinblick auf die Betriebssicherheit ist es vorteilhaft, die Bypassleitung stromauf der Vereinigung mit der Haupt-Kühlluftströmung mit einem Rückhaltesystem zu versehen, das verhindert, dass im Falle eines Bruches des im Bypass angeordneten Stellorganes Trümmer in die Kühlluftkanäle geraten und diese blockieren.

### Kurze Beschreibung der Zeichnung

Die Erfindung wird nachfolgend anhand von in der Zeichnung illustrierten Beispielen näher erläutert. Die Figuren zeigen vorteilhafte Ausführungsformen der Erfindung, wobei für das unmittelbare Verständnis der Erfindung nicht notwendige Details weggelassen worden sind.

Die Ausführungsbeispiele und die Figur sind nur instruktiv und in keinem Fall einschränkend zu verstehen.

### Weg zur Ausführung der Erfindung

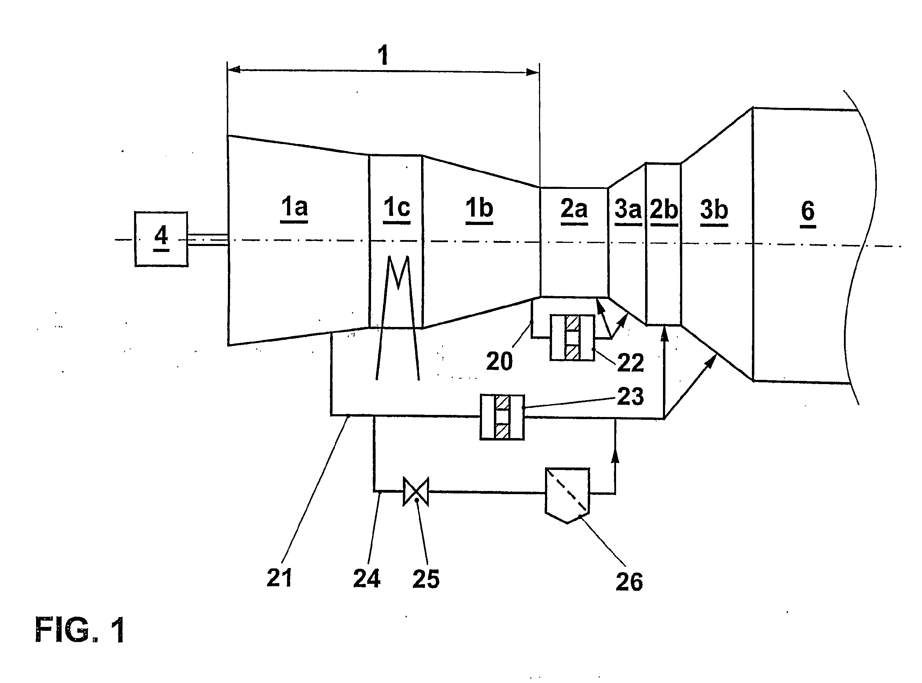

Die Figur 1 zeigt eine Gasturbogruppe modernster Bauart mit sequentieller Verbrennung. Eine solche Gasturbogruppe ist aus der EP 620 362 bekanntgeworden. Ein Verdichter 1 verdichtet und fördert Luft auf einen hohen

Druck in eine erste Brennkammer 2a, in der eine erste Brennstoffmenge verbrannt wird. Das gespannte Rauchgas wird in einer ersten Turbine, Hochdruckturbine, 3a teilentspannt, wobei typischerweise ein Druckverhältnis von 1,5 bis 2 erreicht wird, und strömt mit immer noch hoher Temperatur und hohem Druck in eine zweite Brennkammer 2b ein. Der Sauerstoffgehaltes im Rauchgas nach der ersten Brennkammer ist immer noch vergleichsweise hoch, typischerweise bei 15% bis 17%. Daher kann in der zweiten Brennkammer 2b ohne weiteres zusätzlicher Brennstoff zugeführt und verbrannt werden. Das nacherhitzte Heissgas wird in einer Turbine 3b näherungsweise auf Umgebungsdruck entspannt, und strömt in den Abgastrakt 6 ab. Hier kann sich ohne weiteres auch ein Abhitzedampferzeuger befinden; Gasturbogruppen mit sequentieller Verbrennung eignen sich prinzipbedingt ganz besonders gut für Anwendungen in Kombianlagen. Bei der Entspannung in den Turbinen 3a und 3b geben die Rauchgase eine Leistung ab, die zum Antrieb des Verdichters 1 und eines Generators 4 dient. Aufgrund des hohen, in einer solchen Gasturbogruppe realisierten Druckverhältnisses ist das Kühlsystem mit mindestens zwei unterschiedlichen Druckstufen ausgeführt, im vorliegenden Fall mit einem Hochdruckkühlsystem 20 und einem Niederdruckkühlsystem 21. Das Hochdruckkühlsystem zweigt Luft vom Verdichteraustritt ab, und verwendet diese zur Kühlung der ersten Brennkammer 2a und der Hochdruckturbine 3a. Das Niederdruckkühlsystem 21 zweigt Luft von einer intermediären Verdichterstufe ab, und verwendet diese zur Kühlung der zweiten Brennkammer 2b und der Niederdruckturbine 3b. Diese Zweiteilung des Kühlsystems ermöglicht es, den Hochdruckteil des Heissgaspfades mit Kühlluft eines hohen Druckes zu versorgen, und andererseits eine verlustreiche starke Drosselung von Hochdruckkühlluft zur Kühlung der Niederdrucksektion des Heissgaspfades zu vermeiden. In den Kühlluftleitungen der Kühlsysteme 20, 21 sind Drosselstellen, typischerweise Blenden 22, 23, zur definierten Einstellung der Kühlluftmassenströme angeordnet. Der Verdichter 1 ist in einen ersten Teilverdichter 1 a und einen zweiten Teilverdichter 1b unterteilt, zwischen denen ein Zwischenkühler 1 c angeordnet ist. Durch den Betrieb des Zwischenkühlers 1 c wird die zum Antrieb des Verdichters notwendige Leistung reduziert, wodurch der Wirkungsgrad und die Nutzarbeit der Gasturbogruppe steigen. Dieser Effekt lässt sich auch durch eine Wassereinspritzung in den Verdichter oder eine Übersättigung der Ansaugluft mit Feuchte erreichen, was aufgrund der Verdunstung dieser Feuchte eine intensive Innenkühlung des Verdichters bewirkt. Die Kühlung der Luft im Verdichter hat noch eine andere Wirkung: wie der Fachmann anhand einer einfachen Überlegung zur Stufenkinematik feststellt, wird beim Betrieb mit einer Zwischenkühlung im Verdichter der Druckaufbau in die hinteren Verdichterstufen verlagert. Während der relative Druckabbau über die Turbinenstufen in guter Näherung unverändert bleibt, verschiebt sich der Druckaufbau in den Verdichterstufen deutlich in den zweiten Teilverdichter 1 b. Daraus resultiert eine signifikante Verringerung der treibenden Druckdifferenz über das Niederdruckkühlsystem 21, und daraus eine Verminderung des Niederdruck-Kühlluftmassenstromes. Wird umgekehrt die Drosselstelle 23 des Niederdruck-Kühlsystems 21 so dimensioniert, dass der Kühlluftmassenstrom beim Betrieb mit Kühlung im Verdichter ausreichend ist, führt dies beim Betrieb ohne Verdichterkühlung zur einer deutlichen Überkühlung des Niederdruck-Heissgaspfades, also der Baugruppen 2b und 3b, mit negativen Folgen für Leistung und Wirkungsgrad. Daher ist erfindungsgemäss ein zweiter Strömungskanal 24 so angeordnet, dass er stromauf der Drosselstelle 23 vom Hauptkühlluftkanal abzweigt, und stromab der Drosselstelle wieder im Hauptströmungskanal mündet. Dieser Bypasskanal ist im Normalfall so dimensioniert, dass über ihn nur ein Bruchteil der gesamten Kühlluftmenge strömt, der aber ausreicht, um beim Betrieb mit Verdichterkühlung die aus der Verminderung des treibenden Druckgefälles resultierende Minderströmung im Hauptströmungskanal zu kompensieren. In dem Bypasskanal ist ein Stellorgan 25 angeordnet, um den Bypassstrom variieren zu können. Ein Sieb 26 fungiert als Rückhaltevorrichtung, und verhindert, dass im Falle eines Bruchs des Stellorgans 25 Trümmer in das Kühlsystem gelangen und es verstopfen.

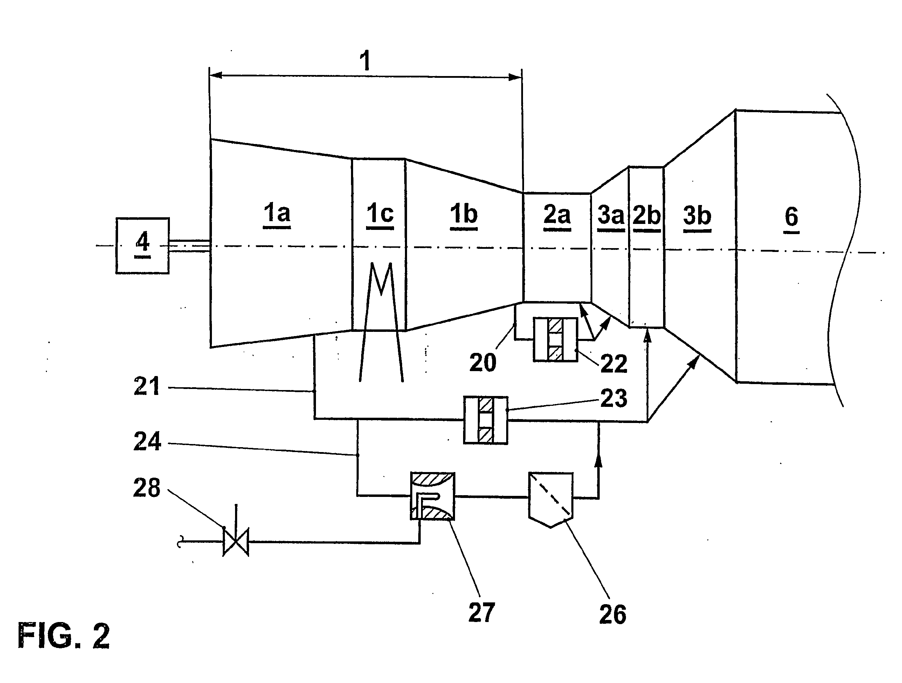

Eine zweite Möglichkeit zur Variation des Bypassstromes ist in Figur 2 dargestellt. Anstelle einer variablen Drosselstelle findet sich in dem Bypasskanal 24 ein Ejektor 27 als Mittel zum variablen Antrieb der Bypassströmung. Als Treibmittel für den Ejektor kommt insbesondere ein kleiner Teilstrom der Hochdruckkühlluft in Frage. Bei Kombianlagen und anderen Anlagenbauarten mit Dampferzeugern, insbesondere auch dann, wenn Kühlluftkühler oder Verdichter-Zwischenkühler als Dampferzeuger ausgeführt sind, wie es in der DE 100 41 413 respektive der EP 515 995 beschrieben ist, kann eine Dampfmenge als Treibmittel für den Ejektor 27 Verwendung finden. Auch die Versorgung von beliebigen externen Quellen ist prinzipiell möglich, meist aber nicht zweckmässig. In der Zeichnung ist die Treibmittelversorgung nicht festgelegt. Der Treibmittelmassenstrom, damit die vom Ejektor ausgeübte Antriebskraft und der Bypassmassenstrom, sind über das Stellorgan 28 einstellbar.

Ähnlich wie eine Zwischenkühlung kann auch die Verstellung mehrerer Leitreihen eine Verschiebung des Druckaufbaus im Verdichter bewirken, was in Bezug auf die Kühlluftmassenströme ebenfalls durch die Erfindung kompensiert werden kann.

Weiterhin ermöglicht es die Erfindung auch, die Kühlluftmenge beispielsweise in Abhängigkeit von der Heissgastemperatur im Bereich der zu kühlenden Komponenten, oder in Abhängigkeit von einer Materialtemperatur, Druckverlusten, und dergleichen mehr, auf ein zur Betriebssicherheit notwendiges Minimum zu reduzieren, und bei hoher Gasturbinenlast entsprechend anzuheben. Insofern ist eine Vielzahl von Möglichkeiten vorstellbar, die Erfindung sinnvoll in das Steuer- und Regelsystem einer Gasturbogruppe zu integrieren.

Selbstverständlich ist die Erfindung auf die Ausführungsbeispiele beschränkt; im Lichte der vorstehenden Ausführungen eröffnet sich dem Fachmann eine Vielzahl möglicher Ausführungsformen der in den Ansprüchen gekennzeichneten Erfindung. Die Erfindung wäre ohne weiteres auch im Hochdruckkühlsystem 20 einsetzbar. Ebenso kann die Erfindung Anwendung finden, wenn nur ein Kühlsystem einer Druckstufe vorhanden ist, oder auch bei mehr als zwei Druckstufen des Kühlsystems.

### Bezugszeichenliste

- 1: Verdichter
- 1 a: Teilverdichter, Niederdruckverdichter
- 1b: Teilverdichter, Hochdruckverdichter
- 1 c: Zwischenkühler
- 2a: erste Brennkammer, Hochdruckbrennkammer
- 2b: zweite Brennkammer, Niederdruckbrennkammer
- 3a: erste Turbine, Hochdruckturbine
- 3b: zweite Turbine, Niederdruckturbine
- 4: Generator
- 6: Abgastrakt, Kamin
- 20: Hochdruckkühlsystem
- 21: Niederdruckkühlsystem
- 22: Drosselstelle
- 23: Drosselstelle
- 24: zweiter Strömungskanal, Bypassleitung
- 25: Stellorgan
- 26: Rückhaltevorrichtung
- 27: Ejektor
- 28: Stellorgan

## Patentansprüche

1. Gasturbogruppe, mit einem Kühlluftsystem (20, 21), über welches im Betrieb wenigstens ein Kühlluftmassenstrom von einem Verdichter (1a, 1b) zu thermisch hochbelasteten Komponenten (2a, 2b, 3a, 3b) der Gasturbogruppe strömt, wobei in wenigstens einem Kühlluftkanal des Kühlluftsystems eine Drosselstelle (22, 23) zur Einstellung des Kühlluftmassenstromes angeordnet ist, und wobei ein zweiter, als Bypasskanal wirkender, Strömungskanal (24) angeordnet ist, welcher stromauf der Drosselstelle (23) aus dem Kühlluftkanal abzweigt, und stromab der Drosselstelle in den Kühlluftkanal mündet, und welcher Mittel (25, 27) zur Variation des Bypassmassenstroms aufweist, **dadurch gekennzeichnet, dass** der Strömungsquerschnitt des zweiten Strömungskanals (24) kleiner ist als der des Kühlluftkanals, derart, dass der zweite Strömungskanal (24) für einen kleineren Massenstrom ausgelegt ist, als der Kühlluftkanal.

2. Gasturbogruppe nach Anspruch 1, **dadurch gekennzeichnet, dass** der Auslegungsmassenstrom des zweiten Strömungskanals kleiner als 80% des Auslegungsmassenstroms des Hauptkühlluftkanals ist, und insbesondere in einem Bereich zwischen 20% und 50% liegt.

3. Gasturbogruppe nach einem der vorstehenden Ansprüche, **dadurch gekennzeichnet**, in dem zweiten Strömungskanal (24) ein extern verstellbares Stellorgan (25) angeordnet ist.

4. Gasturbogruppe nach einem der vorstehenden Ansprüche, **dadurch gekennzeichnet**, in dem zweiten Strömungskanal (24) ein Ejektor (27) angeordnet ist.

5. Gasturbogruppe nach einem der vorstehenden Ansprüche, **dadurch gekennzeichnet, dass** stromauf der Mündung des zweiten Strömungskanals in den Kühlluftkanal eine Rückhaltevorrichtung (26) in dem zweiten Strömungskanal (24) angeordnet ist.

6. Gasturbogruppe nach einem des vorstehenden Ansprüche, **dadurch gekennzeichnet, dass** die Gasturbogruppe eine Gasturbogruppe mit sequentieller Verbrennung ist.

7. Gasturbogruppe nach einem der vorstehenden Ansprüche, **dadurch gekennzeichnet, dass** die Gasturbogruppe mit wenigstens zwei Kühlsystemen unterschiedlicher Druckstufen ausgestattet ist, insbesondere mit einem Hochdruckkühlsystem (23) und einem Niederdruckkühlsystem (24), wobei das Hockdruckkühlsystem von einer der Endstufen (1b) des Verdichters aus angespiessen wird, und das Niederdruckkühlsystem von einer intermediären Stufe (1a) des Verdichters aus angespiessen wird.

8. Gasturbogruppe nach Anspruch 7 **dadurch gekennzeichnet, dass** das Hochdruckkühlsystem (23) mit einer ersten Brennkammer (2a) und einer ersten Turbine (2b) einer Gasturbogruppe mit sequentieller Verbrennung in Verbindung steht, und das Niederdruckkühlsystem (24) mit einer zweiten Brennkammer (2b) und einer zweiten Turbine (3b) einer Gasturbogruppe mit sequentieller Verbrennung in Verbindung steht.

## Claims

1. Gas turbine group comprising a cooling-air system (20, 21), via which during operation at least one cooling-air mass flow flows from a compressor (1a, 1b) to thermally highly stressed components (2a, 2b, 3a, 3b) of the gas turbine group, a throttle point (22, 23) for setting the cooling-air mass flow being arranged in at least one cooling-air channel of the cooling-air system, and a second flow channel (24) being arranged which acts as a bypass channel and which branches off from the cooling-air channel upstream of the throttle point (23) and opens into the cooling-air channel downstream of the throttle point and which has means (25, 27) for varying the bypass mass flow, **characterized in that** the flow cross section of the second flow channel (24) is smaller than that of the cooling-air channel such that the second flow channel (24) is designed for a smaller mass flow than the cooling-air channel.

2. Gas turbine group according to Claim 1, **characterized in that** the design mass flow of the second flow channel is less than 80% of the design mass flow of the main cooling-air channel, and is in particular within a range of between 20% and 50%.

3. Gas turbine group according to either of the preceding claims, **characterized in that** an externally adjustable regulating element (25) is arranged in the second flow channel (24).

4. Gas turbine group according to one of the preceding claims, **characterized in that** an ejector (27) is arranged in the second flow channel (24).

5. Gas turbine group according to one of the preceding claims, **characterized in that** a retention device (26) is arranged in the second flow channel (24) upstream of the point at which the second flow channel (24) opens into the cooling-air channel.

6. Gas turbine group according to one of the preceding claims, **characterized in that** the gas turbine group is a gas turbine group having sequential combustion.

7. Gas turbine group according to one of the preceding claims, **characterized in that** the gas turbine group is equipped with at least two cooling systems of different pressure stages, in particular with a high-pressure cooling system (23) and a low-pressure cooling system (24), the high-pressure cooling system being fed from one of the final stages (1b) of the compressor, and the low-pressure cooling system being fed from an intermediate stage (1a) of the compressor.

8. Gas turbine group according to Claim 7, **characterized in that** the high-pressure cooling system (23) is connected to a first combustion chamber (2a) and a first turbine (2b) of a gas turbine group having sequential combustion, and the low-pressure cooling system (24) is connected to a second combustion chamber (2b) and a second turbine (3b) of a gas turbine group having sequential combustion.

## Revendications

1. Groupe à turbine à gaz, comprenant un système d'air de refroidissement (20, 21), par le biais duquel en fonctionnement, au moins un débit massique d'air de refroidissement s'écoule d'un compresseur (1a, 1b) vers des composants (2a, 2b, 3a, 3b) fortement sollicités thermiquement du groupe à turbine à gaz, dans au moins un canal d'air de refroidissement du système d'air de refroidissement étant disposé un étranglement (22, 23) pour l'ajustement du débit massique d'air de refroidissement, et un deuxième canal d'écoulement (24) agissant en tant que canal de dérivation, étant prévu, lequel part en amont de l'étranglement (23) hors du canal d'air de refroidissement et débouche en aval de l'étranglement dans le canal d'air de refroidissement, et qui présente des moyens (25, 27) pour faire varier le débit massique de dérivation, **caractérisé en ce que** la section transversale d'écoulement du deuxième canal d'écoulement (24) est plus petite que celle du canal d'air de refroidissement, de telle sorte que le deuxième canal d'écoulement (24) soit conçu pour un débit massique inférieur à celui du canal d'air de refroidissement.

2. Groupe à turbine à gaz selon la revendication 1, **caractérisé en ce que** le débit massique d'établissement du deuxième canal d'écoulement est inférieur à 80% du débit massique d'établissement du canal d'air de refroidissement principal, et notamment se situe dans une plage comprise entre 20% et 50%.

3. Groupe à turbine à gaz selon l'une quelconque des revendications précédentes, **caractérisé en ce qu'**un actionneur (25) réglable depuis l'extérieur est disposé dans le deuxième canal d'écoulement (24).

4. Groupe à turbine à gaz selon l'une quelconque des revendications précédentes, **caractérisé en ce qu'**un éjecteur (27) est disposé dans le deuxième canal d'écoulement (24).

5. Groupe à turbine à gaz selon l'une quelconque des revendications précédentes, **caractérisé en ce qu'**un dispositif de retenue (26) est disposé dans le deuxième canal d'écoulement (24) en amont de l'embouchure du deuxième canal d'écoulement dans le canal d'air de refroidissement.

6. Groupe à turbine à gaz selon l'une quelconque des revendications précédentes, **caractérisé en ce que** le groupe à turbine à gaz est un groupe à turbine à gaz avec une combustion séquentielle.

7. Groupe à turbine à gaz selon l'une quelconque des revendications précédentes, **caractérisé en ce que** le groupe à turbine à gaz est muni d'au moins deux systèmes de refroidissement ayant des étages de pression différents, notamment d'un système de refroidissement haute pression (23) et d'un système de refroidissement basse pression (24), le système de refroidissement haute pression étant alimenté depuis l'un des étages finaux (1b) du compresseur et le système de refroidissement basse pression étant alimenté depuis un étage intermédiaire (1a) du compresseur.

8. Groupe à turbine à gaz selon la revendication 7, **caractérisé en ce que** le système de refroidissement haute pression (23) est en liaison avec une première chambre de combustion (2a) et une première turbine (2b) d'un groupe à turbine à gaz à combustion séquentielle, et le système de refroidissement basse pression (24) est en liaison avec une deuxième chambre de combustion (2b) et une deuxième turbine (3b) d'un groupe à turbine à gaz à combustion séquentielle.
